# EUROPÄISCHE PATENTANMELDUNG

(11) **EP 3 636 114 A1**
(43) Veröffentlichungstag der Anmeldung: **15.04.2020**
(21) Anmeldenummer: 19174442.4
(22) Anmeldetag: 14.05.2019
(51) Int. Cl.: A47J 31/44, A47J 31/46

(54) **MILCHEINHEIT FÜR EINEN GETRÄNKEAUTOMATEN**

(30) Priorität: 12.10.2018 DE 202018105857 U
(71) Anmelder: TM Technischer Gerätebau GmbH, 89231 Neu-Ulm (DE)
(72) Erfinder: Müschenborn, Horst, 87700 Memmingen (DE); Riedel, Norbert, 89192 Rammingen (DE)
(74) Vertreter: Patentanwälte Ruff, Wilhelm, Beier, Dauster & Partner mbB

(57) **Zusammenfassung**

Die Erfindung betrifft eine Milcheinheit (1) für einen Getränkeautomaten, umfassend einen Milchbehälter (2) zum Bevorraten von Milch, ein den Milchbehälter aufnehmendes Gehäuse (3) und eine Milchübergabeleitung (4) zur Entnahme von Milch aus dem Milchbehälter (2), wobei die Milchübergabeleitung (4) an dem Milchbehälter (2) angebracht ist, wobei die Milchübergabeleitung (4) an einem Ende ein erstes Anschlusselement (40) aufweist, das außerhalb des Milchbehälters (2) angeordnet ist, und ein gegenüberliegendes Ende der Milchübergabeleitung (4) in den Milchbehälter (2) ragt, wobei an dem Gehäuse (3) ein eine Gehäusewandung durchdringendes Leitungselement (5) angebracht ist, das ein zu dem ersten Anschlusselement (40) komplementäres, im Inneren des Gehäuses (3) angeordnetes zweites Anschlusselement (50) aufweist, und wobei das erste Anschlusselement (40) und das zweite Anschlusselement (50) derart zueinander positioniert sind, dass mittels einer Relativbewegung des Milchbehälters (2) und des Gehäuses (3) das erste Anschlusselement (40) und das zweite Anschlusselement (50) zwangsgeführt miteinander fluidisch verbindbar sind.

## Beschreibung

### ANWENDUNGSGEBIET UND STAND DER TECHNIK

Die Erfindung betrifft eine Milcheinheit für einen Getränkeautomaten, insbesondere einen Kaffeeautomaten, und ein Anschlusssystem hierfür.

Bei einer Kaffeezubereitung, speziell im Geschäfts- und Gastrobereich, besteht vielfach der Wunsch, einen durch einen Kaffeeautomaten zubereiteten Kaffee durch Milch oder Milchschaum zu veredeln, beispielsweise um ein Milchschaumgetränk wie Milchkaffee, Latte Macchiato oder Cappuccino zu zubereiten. Dabei ist es bekannt, in Getränkeautomaten sogenannte Milcheinheiten zu integrieren oder diese als separate Beistelllösung vorzusehen. In den Milcheinheiten wird Milch vorzugsweise in gekühlter Form in einer Milchschale bevorratet. In die Milchschale ragt üblicherweise ein Schlauch oder eine Zuführrohr, im Zusammenhang mit der Erfindung allgemein als Milchübergabeleitung bezeichnet, welche wiederum an einen Anschluss des Getränkeautomaten angeschlossen ist.

### AUFGABE UND LÖSUNG

Es ist eine Aufgabe der Erfindung eine Milcheinheit für einen Getränkeautomaten und ein Anschlusssystem zu schaffen, welche ein einfaches und hygienisches Nachfüllen von Milch ermöglichen.

Gemäß einem ersten Aspekt der Erfindung wird eine Milcheinheit für einen Getränkeautomaten, insbesondere einen Kaffeeautomaten, geschaffen, umfassend einen Milchbehälter zum Bevorraten von Milch, ein den Milchbehälter aufnehmendes Gehäuse und eine Milchübergabeleitung zur Entnahme von Milch aus dem Milchbehälter, wobei die Milchübergabeleitung an dem Milchbehälter angebracht ist und an einem Ende ein erstes Anschlusselement aufweist, wobei das erste Anschlusselement außerhalb des Milchbehälters angeordnet ist und ein gegenüberliegendes Ende der Milchübergabeleitung in den Milchbehälter ragt, wobei an dem Gehäuse ein eine Gehäusewandung durchdringendes Leitungselement angebracht ist, das ein zu dem ersten Anschlusselement komplementäres, im Inneren des Gehäuses angeordnetes zweites Anschlusselement aufweist, und wobei das erste Anschlusselement und das zweite Anschlusselement derart zueinander positioniert sind, dass mittels einer Relativbewegung des Milchbehälters und des Gehäuses das erste Anschlusselement und das zweite Anschlusselement zwangsgeführt miteinander fluidisch verbindbar sind.

Als fluidische Verbindung wird im Zusammenhang mit der Anmeldung eine gegenüber einer Umgebung abgedichtete Verbindung zur Förderung eines Fluids, insbesondere zur Förderung von Flüssigkeiten, bezeichnet.

Bei herkömmlichen Milcheinheiten erfolgt üblicherweise eine manuelle Verbindung einer als Schlauch gestalteten Milchübergabeleitung mit einem ortsfest angeordneten Anschlussstück. Bei einer Bewegung des Milchbehälters in die Nachfüllstellung, beispielsweise zum Nachfüllen oder Austauschen der Milch, bleibt der Schlauch mit dem Anschlussstück verbunden. Vielfach wird dabei der Schlauch durch den Nutzer manuell bewegt, d.h. der Benutzer berührt den Schlauch in einem Bereich, welcher später in die Milch eintaucht.

Durch die erfindungsgemäße Zwangsführung wird eine selbsttätig durchgeführte fluidische Verbindung der Anschlusselemente bei einer Bewegung, einer Relativbewegung, des Milchbehälters und des Gehäuses geschaffen. Dadurch entfällt für einen Bediener eine Notwendigkeit, den Schlauch bei einem Nachfüllen von Milch zu berühren.

Die Anschlusselemente sind erfindungsgemäß zumindest miteinander durch die Relativbewegung verbindbar, vorzugsweise ist auch ein Trennen der Anschlusselemente durch eine Relativbewegung in entgegengesetzter Richtung ohne manuellen Eingriff möglich.

Die Anschlusselemente sind erfindungsgemäß in ihrer Gestaltung und Positionierung aufeinander abgestimmt.

In einer Ausgestaltung ist das Leitungselement an einer Zugangstüre des Gehäuses vorgesehen, wobei eine fluidische Verbindung mit einem Öffnen und Schließen der Zugangstüre getrennt oder geschlossen wird.

Vorzugsweise ist der Milchbehälter zwischen einer Gebrauchsstellung und einer Nachfüllstellung in dem Gehäuse beweglich gelagert, wobei mittels einer Bewegung des Milchbehälters aus der Nachfüllstellung in die Gebrauchsstellung das erste Anschlusselement zwangsgeführt mit dem zweiten Anschlusselement fluidisch verbindbar ist. Dabei wird vorzugsweise bei einer Bewegung des Milchbehälters aus der Gebrauchsstellung in die Nachfüllstellung die fluidische Verbindung automatisch, d.h. ohne manuellen Eingriff im Bereich der Anschlusselemente, gelöst.

Der Milchbehälter ist in einer Ausgestaltung als nach oben offene Milchschale gestaltet. Vorzugsweise umfasst der Milchbehälter eine Milchschale und einen darauf aufgesetzten Deckel.

In einer Ausgestaltung ist die Milchübergabeleitung an einem Bodenbereich der Milchschale vorgesehen, wobei die Milchübergabeleitung ein Ventilelement aufweist, welches bei einer Trennung der Anschlusselemente schließt. Vorzugsweise ist die Milchübergabeleitung an dem auf die Milchschale aufgesetzten Deckel diesen durchdringend gelagert.

Der Milchbehälter ist relativ zu dem Gehäuse beweglich gelagert. In vorteilhaften Ausgestaltungen ist der Milchbehälter in dem Gehäuse entlang einer zumindest in einem Endbereich linearen Einschubrichtung verschiebbar gelagert. Durch die lineare Einschubrichtung kann eine definierte Bewegung des ersten Anschlusselements mit dem Milchbehälter relativ zu dem ortsfest an dem Gehäuse angeordneten zweiten Anschlusselement gewährleistet werden.

Das erste Anschlusselement und das zweite Anschlusselement weisen in vorteilhaften Ausgestaltungen eine Anschlussbuchse und einen komplementären Anschlusszapfen auf. Der Anschlusszapfen ist als Hohlkörper für eine Fluiddurchführung gestaltet. Insbesondere weist in einer Ausgestaltung das erste Anschlusselement eine Anschlussbuchse auf, welche auf einen an dem zweiten Anschlusselement vorgesehenen Anschlusszapfen aufsetzbar ist.

In einer Ausgestaltung weist das zweite Anschlusselement eine den Anschlusszapfen umgebende Führungshülse auf. Die Führungshülse dient je nach Gestaltung als Schutzelement für den Anschlusszapfen und/oder als Einführhilfe bei einer Verbindung des Anschlusszapfens mit der Anschlussbuchse. In einer Ausgestaltung erfolgt eine mechanische Verbindung der Anschlusselemente ausschließlich mittels des Anschlusszapfens und der diesen aufnehmenden Anschlussbuchse. In einer anderen Ausgestaltung trägt die Führungshilfe zu einer mechanischen Verbindung bei.

Das Leitungselement ist an einer geeigneten Stelle für die automatische Kopplung mit der Milchübergabeleitung anbringbar. In einer vorteilhaften Ausgestaltung ist das Leitungselement an einer parallel zu der linearen Einschubrichtung angeordneten Gehäusewand, diese senkrecht durchdringend angeordnet. Je nach Bauraum, kann das Leitungselement dabei an einer Seitenwand, einem Boden oder einer Decke des Gehäuses vorgesehen sein. Vorzugsweise ist das Leitungselement an einer Seitenwand vorgesehen.

Das Leitungselement ist ortsfest an der Gehäusewand angebracht. In einer Ausgestaltung ist das Leitungselement mit der Gehäusewand verrastet. Die Rastverbindung ist dabei vorzugsweise derart gestaltet, dass das Leitungselement zu Wartungs- oder Reinigungszwecken von der Gehäusewand zerstörungsfrei trennbar ist.

Das Leitungselement ist je nach Anforderung durch den Fachmann geeignet gestaltbar. Vorzugsweise weist das Leitungselement an seiner Außenseite eine Rippenstruktur auf. Durch einzelne Rippen der Rippenstruktur werden im Verbindungsbereich des Leitungselements mit dem Gehäuse Kammern gebildet, die einer Isolation dienen.

Die Milchübergabeleitung ist vorzugsweise für eine Reinigung von dem Milchbehälter zerstörungsfrei trennbar. In vorteilhaften Ausgestaltungen weist die Milchübergabeleitung im Bereich des ersten Anschlusselements eine Handhabungsfahne auf. Die Handhabungsfahne dient einer einfachen Handhabung der Milchübergabeleitung bei einer Montage an dem Milchbehälter oder einer Demontage von dem Milchbehälter. Bei einer bestimmungsgemäßen Handhabung der Milchübergabeleitung kann es der Bediener somit vermeiden, einen Bereich der Milchübergabeleitung zu berühren, welcher im Gebrauch in die Milch hineinragt.

Gemäß einem zweiten Aspekt wird ein Anschlusssystem für eine Milcheinheit geschaffen, umfassend eine Milchübergabeleitung zur Entnahme von Milch aus einem Milchbehälter, und ein an der Milcheinheit ortsfest lagerbares Leitungselement, wobei die Milchübergabeleitung ein erstes Anschlusselement aufweist, wobei an dem Leitungselement ein zu dem ersten Anschlusselement komplementäres zweites Anschlusselement vorgesehen ist, und wobei das erste Anschlusselement und das zweite Anschlusselement mittels einer Relativbewegung zwangsgeführt fluidisch verbindbar sind.

### KURZBESCHREIBUNG DER ZEICHNUNGEN

Weitere Vorteile und Aspekte der Erfindung ergeben sich außer aus den Ansprüchen auch aus der nachfolgenden Beschreibung von bevorzugten Ausführungsbeispielen der Erfindung, die nachfolgend anhand der Figuren erläutert sind. Dabei zeigen:
- Fig. 1: schematisch in einer geschnittenen Darstellung eine Milcheinheit für einen Getränkeautomaten in einer Frontansicht;
- Fig. 2: einen Milchbehälter mit einer Milchschale und einem Deckel und eine Milchübergabeleitung in einer perspektivischen Darstellung;
- Fig. 3: eine Milchübergabeleitung gemäß Fig. 2 mit einem ersten Anschlusselement in einer Seitenansicht;
- Fig. 4: ein Leitungselement mit einem zweiten Anschlusselement für eine Milcheinheit in einer perspektivischen Darstellung;
- Fig. 5: das Leitungselement mit dem zweiten Anschlusselement gemäß Fig. 4 in einer Vorderansicht;
- Fig. 6: eine geschnittene Draufsicht auf die Milchübergabeleitung mit dem ersten Anschlusselement gemäß Fig. 3 und das Leitungselement gemäß Fig. 4 vor einem Verbinden; und
- Fig. 7: in einer geschnittenen Darstellung ein Detail einer Milcheinheit für einen Getränkeautomaten ähnlich Fig. 1 in einer Seitenansicht.

### DETAILLIERTE BESCHREIBUNG DER AUSFÜHRUNGSBEISPIELE

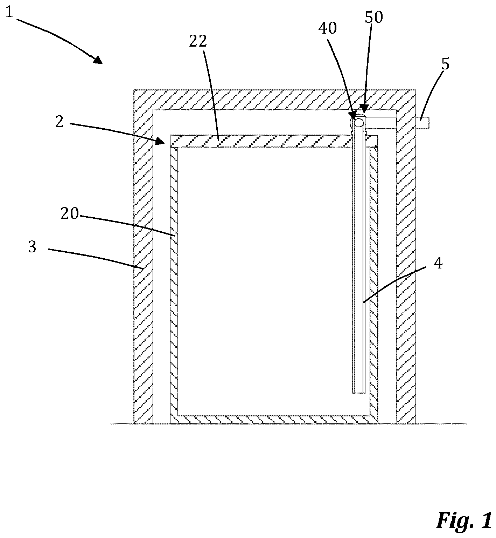

Fig. 1 zeigt schematisch eine Milcheinheit 1 für einen nicht dargestellten Getränkeautomaten, beispielsweise einen Kaffeeautomaten, umfassend einen Milchbehälter 2 zum Bevorraten von Milch mit einer Milchschale 20 und einem darauf aufgesetzten Deckel 22, und ein den Milchbehälter 2 aufnehmendes Gehäuse 3.

Die Milcheinheit 1 umfasst weiter eine Milchübergabeleitung 4 zur Entnahme von Milch aus dem Milchbehälter 2 und ein Leitungselement 5.

Die Milchübergabeleitung 4 ist an dem Milchbehälter 2 angebracht, in dem dargestellten Ausführungsbeispiel ist die Milchübergabeleitung 4 in eine an dem Deckel 22 vorgesehene Öffnung eingesetzt und durchdringt somit den Deckel 22. Die Milchübergabeleitung 4 weist an einem Ende ein erstes Anschlusselement 40 auf, welches außerhalb des Milchbehälters angeordnet ist. Ein gegenüberliegendes Ende ragt in den Milchbehälter 2 hinein und dient im Gebrauch einem Ansaugen der Milch.

An dem Gehäuse 3 ist ein eine Gehäusewandung durchdringendes Leitungselement 5 angebracht, das ein zu dem ersten Anschlusselement 40 komplementäres, im Inneren des Gehäuses 3 angeordnetes zweites Anschlusselement 50 aufweist. Ein außerhalb des Gehäuses 3 angeordnetes Ende des Leitungselements 5 ist an ein nicht dargestelltes Leitungssystem des Getränkeautomaten anschließbar.

Der dargestellte Milchbehälter 2 ist zwischen einer dargestellten Gebrauchsstellung und einer Nachfüllstellung in dem Gehäuse 3 senkrecht zur Zeichenebene beweglich gelagert.

Das erste Anschlusselement 40 und das komplementäre zweite Anschlusselement 50 sind derart zueinander positioniert, dass bei einer Bewegung des Milchbehälters 2 senkrecht zu der Zeichenebene aus der Nachfüllstellung in die dargestellte Gebrauchsstellung das erste Anschlusselement 40 zwangsgeführt mit dem zweiten Anschlusselement 50 fluidisch verbunden wird. In der verbundenen Stellung wird die Milch mittels der Milchübergabeleitung 4 aus der Milchschale 20 angesaugt und mittels des ersten Anschlusselements 40 in das zweite Anschlusselement 50 und somit in das Leitungselement 5 transportiert.

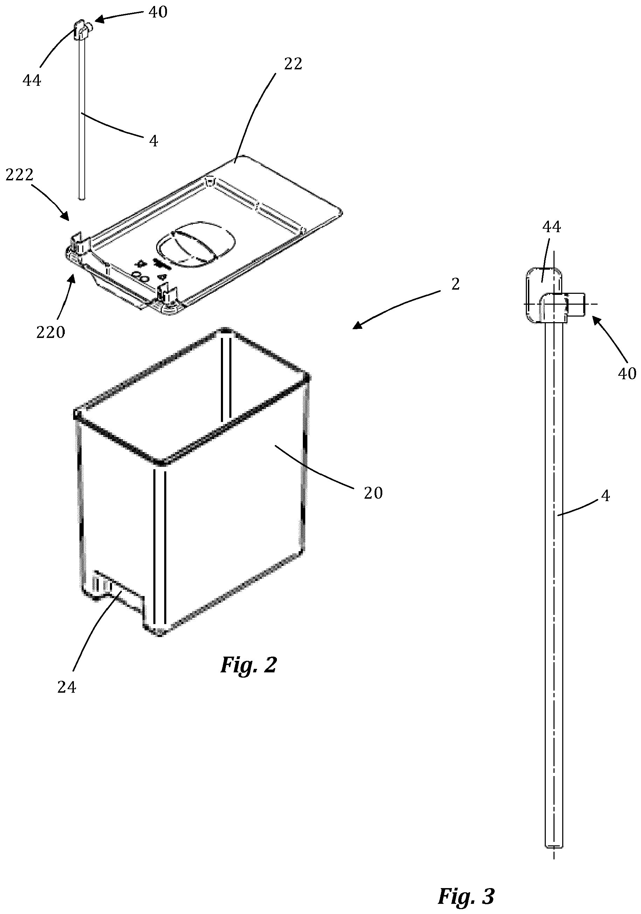

Zum Nachfüllen von Milch wird der Milchbehälter 2, d.h. die Milchschale 20 und der Deckel 22, beispielsweise in Richtung des Bedieners gezogen. Die Milchschale 20 weist zu diesem Zweck in einer Ausgestaltung eine Griffmulde (24 vgl. Fig. 2) auf.

Bei der Bewegung des Milchbehälters 2 löst sich das erste Anschlusselement 40 von dem zweiten Anschlusselement 50, ohne dass der Bediener zu diesem Zweck die Milchübergabeleitung 4 berühren muss. Die Milchübergabeleitung 4 mit dem ersten Anschlusselement 40 verbleibt an dem Milchbehälter 2, in dem dargestellten Ausführungsbeispiel an dem Deckel 22 des Milchbehälters 2. Für ein Befüllen ist der Deckel 22 in einer Ausgestaltung relativ zu der Milchschale 20 nach hinten in Richtung des Gehäuses 3 verschiebbar. Nach einem Befüllen wird der Milchbehälter 2 wieder in die Gebrauchsstellung bewegt, wobei das erste Anschlusselement 40 zwangsgeführt mit dem zweiten Anschlusselement 50 fluidisch verbunden wird, ohne dass der Bediener zu diesem Zweck die Milchübergabeleitung 4 berühren muss.

Bei der dargestellten Milcheinheit 1 wird sowohl beim Nachfüllen als auch beim Anschließen verhindert, dass ein Bediener mit einem Abschnitt der Milchübergabeleitung 4 in Berührung kommt, welcher mit einer bevorrateten Milch in Kontakt steht. Bei einer fachgerechten Handhabung kann so eine Verkeimung vermieden werden.

Die Fig. 2 bis 7 zeigen Einzelheiten der schematisch in Fig. 1 dargestellten Milcheinheit 1.

Fig. 2 zeigt in einer perspektivischen Explosionsdarstellung den Milchbehälter 2 mit der Milchschale 20 und dem darauf aufsetzbaren Deckel 22 sowie die an dem Deckel 22 anbringbare Milchübergabeleitung 4 mit dem ersten Anschlusselement 40. Die dargestellte Milchschale 20 weist an einer Vorderseite im Bodenbereich eine Griffmulde 24 auf.

Der Deckel 22 weist für die Milchübergabeleitung 4 mit dem ersten Anschlusselement 40 eine Öffnung 220 auf. Durch diese Öffnung 220 ist die Milchübergabeleitung 4 hindurchführbar, wobei das erste Anschlusselement 40 an einer Außenseite des Deckels 22 verbleibt. An der Öffnung 220 ist eine Positionierhilfe 222 vorgesehen. Die dargestellte Positionierhilfe 222 ist U-förmig mit zwei in Richtung einer Rückseite weisenden Schenkeln ausgebildet.

Der Deckel 22 ist weiter auf die Milchschale 20 aufsetzbar und mit dieser verbindbar. Für eine Reinigung kann die Milchübergabeleitung 4 von dem Deckel 22 getrennt werden.

In dem dargestellten Ausführungsbeispiel ist für eine einfache und hygienische Handhabung an dem ersten Anschlusselement 40 eine Handhabungsfahne 44 vorgesehen. Dank der an dem Deckel 22 vorgesehenen Positionierhilfe 222 ist eine einfache und exakte Positionierung der Milchübergabeleitung 4 an dem Deckel 22 gewährleistet. Eine Breite der Milchübergabeleitung 4 in der auf der Außenseite des Deckels 22 angeordneten Bereich ist derart gewählt, dass die Breite der Milchübergabeleitung 4 mit der Breite der Positionierhilfe 222 zumindest nahezu übereinstimmt und dadurch dieser Bereich an den Schenkeln der Positionierhilfe 222 anliegt. Somit wird mittels der Positionierhilfe 222 ein Verdrehen der Milchübergabeleitung 4 um deren Längsachse relativ zu dem Deckel 22 verhindert.

An dem dargestellten Deckel 22 sind zwei Positionierhilfen vorgesehen, sodass wahlweise ein Anschluss an ein linkes oder rechtes an dem Gehäuse 3 vorgesehenes Leitungselement 5 möglich ist. In anderen Ausgestaltungen ist nur eine Öffnung 220 mit einer Positionierhilfe 222 vorgesehen.

Fig. 3 zeigt die Milchübergabeleitung 4 gemäß Fig. 2 mit dem ersten Anschlusselement 40 in einer Seitenansicht. Das erste Anschlusselement 40 ist mit der Milchübergabeleitung 4 an einer der Ansaugseite für die Milch gegenüberliegenden Seite verbunden. Weiter ist die Handhabungsfahne 44 dargestellt, die einen Berührpunkt für Benutzer bietet, um die Milchübergabeleitung 4 samt erstem Anschlusselement 40 bewegen zu können, ohne die Milchübergabeleitung 4 oder das erste Anschlusselement 40 berühren zu müssen.

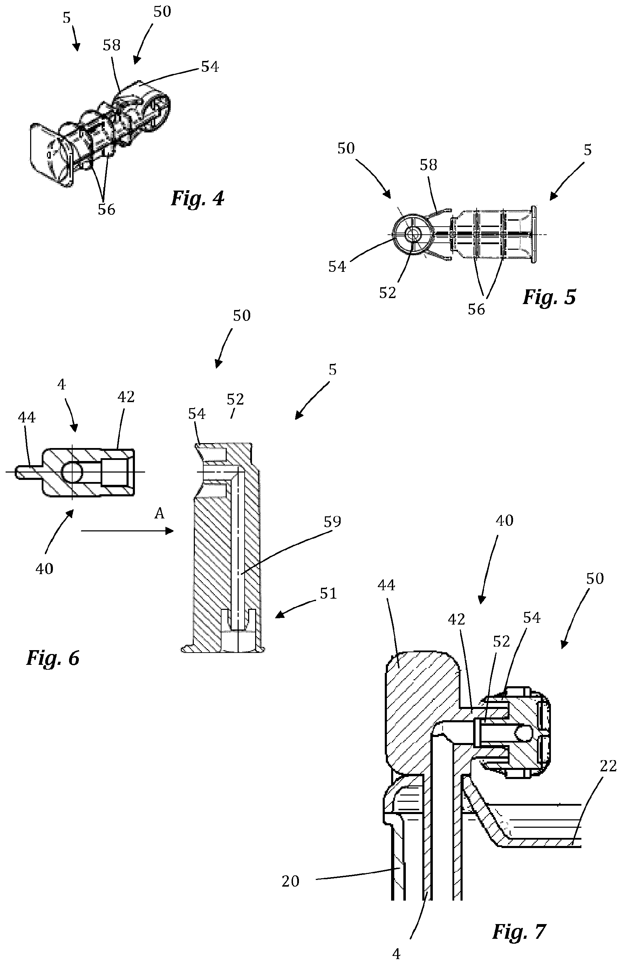

Fig. 4 und 5 zeigen das Leitungselement 5 mit dem zweiten Anschlusselement 50 für die Milcheinheit 1 in einer perspektivischen Darstellung bzw. einer Vorderansicht. Das dargestellte Anschlusselement 50 weist einen Anschlusszapfen 52 auf. An einer Längsseite des Leitungselements 5 ist eine Rippenstruktur mit Rippen 56 vorgesehen. Die Rippen 56 weisen einen gewissen Abstand zueinander auf und bilden so einzelne Kammern aus. Diese Kammern dienen der Isolation. Auf der Seite des zweiten Anschlusselements 50 sind zumindest zwei federnde Widerhaken 58 angeordnet. Die Widerhaken 58 können, ähnlich wie ein Clipverschluss, das Leitungselement 5 in einer Öffnung des Gehäuses 3 (vgl. Fig. 1) arretieren indem sie die Öffnung hintergreifen. Durch Verformen der Widerhaken 58 ist das Leitungselement 5 von dem Gehäuse 3 (vgl. Fig. 1) demontierbar. Weiter weist das dargestellte zweite Anschlusselement 50 eine Führungshülse 54 auf, die einem Schutz des Anschlusszapfens 52 dient.

Fig. 6 zeigt in einer geschnittenen Darstellung eine Draufsicht auf die Milchübergabeleitung 4, mit dem ersten Anschlusselement 40 und der Handhabungsfahne 44 und das Leitungselement 5 mit dem zweiten Anschlusselement 50. Das erste Anschlusselement 40 weist eine Anschlussbuchse 42 auf. Ein Innenraum der Milchübergabeleitung 4 ist in dem ersten Anschlusselement 40 fortgeführt und weitet sich in der Anschlussbuchse 42 hin zu einem offenen Ende auf. Die Anschlussbuchse 42 ist mit dem Anschlusszapfen 52 des zweiten Anschlusselements 50 durch Bewegung in eine durch einen Pfeil A dargestellte lineare Einschubrichtung fluidisch verbindbar, wobei der Anschlusszapfen 52 in die Anschlussbuchse 42 eingeführt wird. Ein Außenumfang des Anschlusszapfens 52 entspricht zu diesem Zweck im Wesentlichen einem Innenumfang der Anschlussbuchse 42. Weiter ist an der dem zweiten Anschlusselement 50 zugewandten Seite der Anschlussbuchse 42 eine Fase vorgesehen, um ein Einführen bzw. Zentrieren und formschlüssiges Ineinandergreifen der Anschlussbuchse 42 des ersten Anschlusselements 40 mit dem Anschlusszapfen 52 des zweiten Anschlusselements 50 zu erleichtern.

Ebenso ist an der dem ersten Anschlusselement 40 zugewandten Seite des Leitungselements 5 ist eine Fase vorgesehen, um ein Einführen bzw. Zentrieren und formschlüssiges Ineinandergreifen des Anschlusszapfens 52 des zweiten Anschlusselements 50 mit der Anschlussbuchse 42 des ersten Anschlusselements 40 zu erleichtern. Das Leitungselement 5 weist eine Leitung 59 auf, die nach dem zweiten Anschlusselement 50 rechtwinklig abknickt und entlang einer Längsseite des Leitungselements 5 verläuft. Am Ende der Leitung 59 ist ein weiteres Anschlusselement 51 vorgesehen, das an ein nicht dargestelltes Leitungssystems eines Getränkeautomaten, beispielsweise eines Kaffeeautomaten, zu einem weiteren Transport des Fluids, insbesondere der Milch anschließbar ist.

Fig. 7 zeigt ein Detail der Milcheinheit 1 für einen Getränkeautomaten in einer geschnittenen Seitenansicht. Fig. 7 zeigt eine Schnittansicht der Fig. 1 senkrecht zu der Zeichenebene und durch das erste und zweite Anschlusselement 40 und 50 ähnlich Fig. 1. Es ist die Milchübergabeleitung 4 mit dem ersten Anschlusselement 40 und der Anschlussbuchse 42 sowie dem zweiten Anschlusselement 50 mit dem Anschlusszapfen 52 dargestellt. Wie in Fig. 7 erkennbar, umgibt die Führungshülse 54 die formschlüssige und fluiddichte Verbindung der Anschlussbuchse 42 mit dem Anschlusszapfen 52. Weiter ist ein Teil der Milchschale 20 sowie des Deckels 22 abgebildet.

Die Milchübergabeleitung 4 weist das erste Anschlusselement 40 auf, mittels dessen die Milchübergabeleitung 4 mit dem Deckel 22 verbunden ist. Das erste Anschlusselement 40 ist mit der Anschlussbuchse 42 komplementär zu dem zweiten Anschlusselement 50 mit dem Anschlusszapfen 52 ausgebildet.

Das erste Anschlusselement 40 weist die Anschlussbuchse 42 auf. Das zweite Anschlusselement 50 weist einen zapfenförmigen Hohlkörper, den Anschlusszapfen 52, auf. Der Außendurchmesser des Anschlusszapfens 52 des zweiten Anschlusselements 50 ist so ausgebildet, dass er zu dem Innendurchmesser der Anschlussbuchse 42 des ersten Anschlusselements 40 passt und in diesen einführbar ist. Dabei umgibt die Anschlusshülse 42 den Anschlusszapfen 52. Die Anschlussbuchse 42 des ersten Anschlusselements 40 und der Anschlusszapfen 52 des zweiten Anschlusselements 50 sind somit formschlüssig und fluiddicht miteinander verbindbar. Das Anschlusselement 40 der in den Figuren dargestellten Milchübergabeleitung 4 ist somit durch eine Längsbewegung, in der in Fig. 7 dargestellten Ansicht in der Zeichenebene nach links, von dem zweiten Anschlusselement 50 trennbar und durch eine Bewegung in die entgegengesetzte Richtung wieder mit diesem verbindbar.

## Patentansprüche

1. Milcheinheit (1) für einen Getränkeautomaten, insbesondere einen Kaffeeautomaten, umfassend einen Milchbehälter (2) zum Bevorraten von Milch, ein den Milchbehälter aufnehmendes Gehäuse (3) und eine Milchübergabeleitung (4) zur Entnahme von Milch aus dem Milchbehälter (2), **dadurch gekennzeichnet, dass**
- die Milchübergabeleitung (4) an dem Milchbehälter (2) angebracht ist und an einem Ende ein erstes Anschlusselement (40) aufweist, wobei das erste Anschlusselement (40) außerhalb des Milchbehälters (2) angeordnet ist und ein gegenüberliegendes Ende der Milchübergabeleitung (4) in den Milchbehälter (2) ragt,
- an dem Gehäuse (3) ein eine Gehäusewandung durchdringendes Leitungselement (5) angebracht ist, das ein zu dem ersten Anschlusselement (40) komplementäres, im Inneren des Gehäuses (3) angeordnetes zweites Anschlusselement (50) aufweist,
wobei das erste Anschlusselement (40) und das zweite Anschlusselement (50) derart zueinander positioniert sind, dass mittels einer Relativbewegung des Milchbehälters (2) und des Gehäuses (3) das erste Anschlusselement (40) und das zweite Anschlusselement (50) zwangsgeführt miteinander fluidisch verbindbar sind.

2. Milcheinheit (1) nach Anspruch 1, **dadurch gekennzeichnet, dass** der Milchbehälter (2) zwischen einer Gebrauchsstellung und einer Nachfüllstellung in dem Gehäuse (3) beweglich gelagert ist, wobei mittels einer Bewegung des Milchbehälters (2) aus der Nachfüllstellung in die Gebrauchsstellung das erste Anschlusselement (40) zwangsgeführt mit dem zweiten Anschlusselement (50) fluidisch verbindbar ist.

3. Milcheinheit (1) nach Anspruch 1 oder 2, **dadurch gekennzeichnet, dass** der Milchbehälter (2) eine Milchschale (20) und einen darauf aufgesetzten Deckel (22) aufweist, wobei die Milchübergabeleitung (4) an dem Deckel (22) diesen durchdringend gelagert ist.

4. Milcheinheit (1) nach Anspruch 1, 2 oder 3, **dadurch gekennzeichnet, dass** der Milchbehälter (2) in dem Gehäuse (3) entlang einer zumindest in einem Endbereich linearen Einschubrichtung (A) verschiebbar gelagert ist.

5. Milcheinheit (1) nach Anspruch 4, **dadurch gekennzeichnet, dass** das erste Anschlusselement (40) eine Anschlussbuchse (42) aufweist, welche auf einen an dem zweiten Anschlusselement (50) vorgesehenen Anschlusszapfen (52) aufsetzbar ist.

6. Milcheinheit (1) nach Anspruch 5, **dadurch gekennzeichnet, dass** das zweite Anschlusselement (50) eine den Anschlusszapfen (52) umgebende Führungshülse (54) aufweist.

7. Milcheinheit (1) nach Anspruch 4, 5 oder 6, **dadurch gekennzeichnet, dass** das Leitungselement (5) an einer parallel zu der linearen Einschubrichtung (A) angeordneten Gehäusewand, diese senkrecht durchdringend angeordnet ist.

8. Milcheinheit (1) nach Anspruch 7, **dadurch gekennzeichnet, dass** das Leitungselement (5) mit der Gehäusewand verrastet ist.

9. Milcheinheit (1) nach Anspruch 7 oder 8, **dadurch gekennzeichnet, dass** das Leitungselement (5) an seiner Außenseite eine Rippenstruktur mit Rippen (56) aufweist.

10. Milcheinheit (1) nach einem der Ansprüche 1 bis 9, **dadurch gekennzeichnet, dass** die Milchübergabeleitung (4) im Bereich des ersten Anschlusselements (40) eine Handhabungsfahne (44) aufweist.

11. Anschlusssystem für eine Milcheinheit (1) umfassend eine Milchübergabeleitung (4) zur Entnahme von Milch aus einem Milchbehälter (2), **dadurch gekennzeichnet, dass**
- die Milchübergabeleitung (4) ein erstes Anschlusselement (40) aufweist und
- ein an der Milcheinheit (1) ortsfest lagerbares Leitungselement (5) mit einem ein zu dem ersten Anschlusselement (40) komplementären zweiten Anschlusselement (50) vorgesehen ist,
wobei das erste Anschlusselement (40) und das zweite Anschlusselement (50) mittels einer Relativbewegung zwangsgeführt fluidisch verbindbar sind.
